# EUROPEAN PATENT APPLICATION

(11) **EP 4 741 349 A1**
(43) Date of publication of application: **13.05.2026**
(21) Application number: 24856783.6
(22) Date of filing: 20.08.2024
(51) Int. Cl.: C01G 53/00, H01M 4/525, H01M 4/505, H01M 10/052, H01M 4/02

(54) **METHOD FOR PRODUCING POSITIVE ELECTRODE ACTIVE MATERIAL**

(30) Priority: 22.08.2023 KR 20230109810
(71) Applicant: LG Chem, Ltd., Seoul 07336 (KR)
(72) Inventor: KIM, Sun Tai, Daejeon 34122 (KR); JEON, Hye Ji, Daejeon 34122 (KR); NAM, Dae Hyeon, Daejeon 34122 (KR); LEE, Ju Ho, Daejeon 34122 (KR); SHIN, Ho Geun, Daejeon 34122 (KR); YOON, Jin Seul, Daejeon 34122 (KR); KIM, Young Jun, Daejeon 34122 (KR)
(74) Representative: Hoffmann Eitle
(86) International application number: PCT/KR2024/012310
(87) International publication number: WO 2025/042172

(57) **Abstract**

The present invention relates to a method for preparing a positive electrode active material, including (A) mixing a transition metal hydroxide and a lithium raw material to prepare a mixture, and (B) firing the mixture to prepare a lithium transition metal oxide in the form of a single particle, wherein the firing includes a temperature-raising phase in which firing is performed at a temperature raised to 700 °C to 1,000 °C from room temperature and a temperature-maintaining phase in which firing is performed at a constant temperature of 700 °C to 1,000 °C, and in the temperature-raising phase, the temperature-raising from room temperature to a temperature of 400 °C to 500 °C is performed in an atmosphere containing water vapor.

## Description

### TECHNICAL FIELD

### Cross-reference to Related Applications

The present application claims the benefit of the priority of Korean Patent Application No. 10-2023-0109810, filed on August 22, 2023, which is hereby incorporated by reference in its entirety.

### Technical Field

The present invention relates to a method for preparing a positive electrode active material for a lithium secondary battery.

### BACKGROUND ART

The recent technological development of electric vehicles has resulted in a rising demand for high-capacity secondary batteries, and accordingly, extensive research efforts are directed towards a positive electrode using a high nickel (high Ni) positive electrode active material having excellent capacity properties.

The high-Ni positive electrode active material is prepared through a co-precipitation method, and thus the prepared high-Ni positive electrode active material takes the form of a secondary particle in which primary particles are aggregated. However, the active material having the form of a secondary particle exhibits fine cracks in the secondary particle during a prolonged charging and discharging process, causing a side reaction, and the secondary particle also undergoes structural degradation when increasing electrode density for enhancing energy density, thereby causing degradation in energy density and lifespan characteristics due to reduced active material and electrolyte.

To overcome the limitations of the high-nickel positive electrode active material in the form of a secondary particle, efforts are being made to develop a single particle-type nickel-based positive electrode active material. The single particle-type nickel-based positive electrode active material hardly exhibits particle breakage even when the electrode density is increased for a high energy density.

Meanwhile, in typical methods for preparing single particle-type lithium transition metal oxide, additives to promote crystallization were added, excess lithium raw materials were used, or firing was performed at high temperatures for a long duration. However, the addition of additives left behind impurities, the use of excess lithium raw materials reduced capacity or left unreacted residual lithium due to the introduction of excess lithium into a positive electrode material, and the high-temperature firing for a long duration resulted in low productivity.

Consequently, there is a need to develop a method for preparing single particle-type positive electrode active materials exhibiting excellent monodispersity and leaving no residual lithium.

### DISCLOSURE OF THE INVENTION

### TECHNICAL PROBLEM

The present invention is intended to provide a method for preparing a positive electrode active material capable of improving the monodispersity and quality of a positive electrode active material.

However, tasks of the present invention are not limited to the aforesaid, but other tasks not described herein will be clearly understood by those skilled in the art from descriptions below.

### TECHNICAL SOLUTION

To address the above-described tasks, the present invention provides a method for preparing a positive electrode active material.
(1) The present invention provides a method for preparing a positive electrode active material, including (A) mixing a transition metal hydroxide and a lithium raw material to prepare a mixture, and (B) firing the mixture to prepare a lithium transition metal oxide in the form of a single particle, wherein the firing includes a temperature-raising phase in which firing is performed at a temperature raised to 700 °C to 1,000 °C from room temperature and a temperature-maintaining phase in which firing is performed at a constant temperature of 700 °C to 1,000 °C, and in the temperature-raising phase, the temperature-raising from room temperature to a temperature of 400 °C to 500 °C is performed in an atmosphere containing water vapor.
(2) The present invention provides the method according to (1) above, wherein the transition metal hydroxide contains at least 80 mol% of nickel among total transition metals.
(3) The present invention provides the method according to (1) or (2) above, wherein the transition metal hydroxide has a composition represented by Formula 1 below.

   [Formula 1] Niₐ₁Co_{b1}Mn_{c1}M¹_{d1}(OH)₂

   In Formula 1 above,
   M¹ is at least one selected from the group consisting of Al, Zr, B, W, Mg, Hf, Ta, Ti, Sr, Ba, Ce, F, P, S, and La, and
   0.8≤a1<1.0, 0<b1<0.2, 0<c1<0.2, and 0≤d1≤0.1.
(4) The present invention provides the method according to any one of (1) to (3) above, wherein the transition metal hydroxide and the lithium raw material are mixed such that a molar ratio (M:Li) of transition metal (M) contained in the transition metal hydroxide and lithium (Li) contained in the lithium raw material is 1:0.95 to 1:1.10.
(5) The present invention provides the method according to any one of (1) to (4) above, wherein the firing includes a temperature-raising phase in which firing is performed at a temperature raised to 800 °C to 900 °C from room temperature and a temperature-maintaining phase in which firing is performed at a constant temperature of 800 °C to 900 °C.
(6) The present invention provides the method according to any one of (1) to (5) above, wherein in the temperature-raising phase, the temperature-raising from room temperature to a temperature of 400 °C to 450 °C is performed in an atmosphere containing water vapor.
(7) The present invention provides the method according to any one of (1) to (6) above, wherein a temperature-raising rate during the temperature-raising from room temperature to a temperature of 700 °C to 1000 °C is 1.0 °C/min to 5.0 °C/min.
(8) The present invention provides the method according to any one of (1) to (7) above, wherein the atmosphere containing water vapor is an oxidizing atmosphere containing water vapor.
(9) The present invention provides the method according to any one of (1) to (8) above, wherein the temperature-maintaining phase is performed for 1 hour to 7 hours.

### ADVANTAGEOUS EFFECTS

In a preparation method of the present invention, upon preparing a positive electrode active material in the form of a single particle, when temperature is raised from room temperature to a temperature of 400 °C to 500 °C in an atmosphere containing water vapor during a process of firing a mixture of a positive electrode active material precursor (transition metal hydroxide) and a lithium raw material, particle growth may be promoted, thereby increasing the productivity and quality of a positive electrode active material exhibiting high monodispersity.

### BRIEF DESCRIPTION OF THE DRAWINGS

FIG. 1 is an SEM image showing a positive electrode active material powder of Example 1;
FIG. 2 is an SEM image showing a positive electrode active material powder of Comparative Example 1;
FIG. 3 is an SEM image showing a positive electrode active material powder of Comparative Example 2; and
FIG. 4 is an SEM image showing a positive electrode active material powder of Comparative Example 3.

### BEST MODE FOR CARRYING OUT THE INVENTION

Hereinafter, the present invention will be described in more detail.

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, it will be further understood that the terms "include," "comprise," or "have" specify the presence of stated features, numbers, steps, elements, or combinations thereof, but do not preclude the presence or addition of one or more other features, numbers, steps, elements, or combinations thereof.

Herein, the term "on" indicates a case in which a certain component is formed directly on an upper surface of another component, and also a case in which a third component is interposed between these components.

Herein, a single particle form is a concept in contrast to a spherical secondary particle form which is formed by aggregation of tens to hundreds of primary particles prepared through a typical method, wherein it is a form in which particles are separated and/or dispersed from each other to form each independent and/or separated phase for each particle, but may include a form in which 2 to 10 particles are attached to each other. That is, the single particle form may be a form consisting of only one particle or a form consisting of 2 to 10 primary particles.

Herein, the primary particle indicates a smallest unit particle observed upon measuring through a scanning electron microscope (SEM). The term "secondary particle" refers to an aggregate, that is a secondary structure, in which primary particles are aggregated through physical or chemical bonding between the primary particles without an intentional aggregation or assembly process of the primary particles constituting the secondary particle.

Herein, a particle size of primary particles is a value of equivalent circular diameter (ECD) which is the diameter of a circle having the same area as particles separated with respect to particle boundaries in an SEM image, and an average particle size of primary particles is an average value of equivalent circular diameter (ECD) which is the diameter of a circle having the same area as particles separated with respect to particle boundaries in an SEM image. The average particle size of primary particles may be measured from a primary particle-level segmented image obtained by image-processing an SEM image using an artificial intelligence model. Specifically, the segmented image may be obtained by obtaining an SEM image of a target positive electrode active material powder for measurement, inputting the obtained SEM image into an U-NET structure to generate a binary image, converting the binary image into a distance-converted image based on a distance-converted algorithm, filtering the binary image using a threshold value set based on the distance-converted image, identifying a plurality of objects included in the filtered binary image, and then segmenting the SEM image into primary particle units based on the plurality of objects.

Herein, in a lithium composite transition metal oxide or a positive electrode active material in the form of a single particle, high monodispersity indicates, from a morphological point of view, that the number of primary particles forming one particle is small, and that the size of primary particles is correspondingly large.

### Method for preparing positive electrode active material

The inventors have found that, upon preparing a positive electrode active material in the form of a single particle, when temperature is raised from room temperature to a temperature of 400 °C to 500 °C in an atmosphere containing water vapor during a process of firing a mixture of a positive electrode active material precursor (transition metal hydroxide) and a lithium raw material, particle growth may be promoted, thereby increasing the productivity and quality of a positive electrode active material exhibiting high monodispersity, completing the invention.

Specifically, a method for preparing a positive electrode active material according to the present invention includes (A) mixing a transition metal hydroxide and a lithium raw material to prepare a mixture, and (B) firing the mixture to prepare a lithium transition metal oxide in the form of a single particle, wherein the firing includes a temperature-raising phase in which firing is performed at a temperature raised to 700 °C to 1,000 °C from room temperature and a temperature-maintaining phase in which firing is performed at a constant temperature of 700 °C to 1,000 °C, and in the temperature-raising phase, the temperature-raising from room temperature to a temperature of 400 °C to 500 °C is performed in an atmosphere containing water vapor.

Hereinafter, the method for preparing a positive electrode active material according to the present invention will be described in more detail.

### Step (A)

The present invention includes (A) mixing a transition metal hydroxide and a lithium raw material to prepare a mixture. In this case, the mixing may be dry mixing.

According to the present invention, the transition metal hydroxide may contain at least 80 mol% of nickel among transition metals. The transition metal hydroxide may include nickel, and cobalt, manganese, or a combination thereof.

Specifically, the transition metal hydroxide may have a composition represented by Formula 1 below.

[Formula 1] Niₐ₁Co_{b1}Mn_{c1}M¹_{d1}(OH) ₂

In Formula 1 above,
M¹ is at least one selected from the group consisting of Al, Zr, B, W, Mg, Hf, Ta, Ti, Sr, Ba, Ce, F, P, S, and La, and
0.8≤a1<1.0, 0<b1<0.2, 0<c1<0.2, and 0≤d1≤0.1.

Meanwhile, a1+b1+c1+d1=1.

M¹ above may be at least one selected from Al, Zr, B, W, Mg, Hf, Ta, Ti, Sr, Ba, Ce, F, P, S, and La as a doping element, and may specifically be Al, Zr, Ti, or a combination thereof.

a1 above indicates a molar ratio of nickel to total metals in the transition metal hydroxide, and may be 0.8 or greater, 0.83 or greater, 0.85 or greater, 0.93 or less, or less than 1.0.

b1 above indicates a molar ratio of cobalt to total metals in the transition metal hydroxide, and may be greater than 0, 0.04 or greater, 0.05 or greater, 0.1 or less, 0.15 or less, or less than 0.2.

c1 above indicates a molar ratio of manganese to total metals in the transition metal hydroxide, and may be greater than 0, 0.05 or greater, 0.08 or greater, 0.12 or less, 0.16 or less, or less than 0.2.

d1 above indicates a molar ratio of M¹ element to total metals in the transition metal hydroxide, and may be 0 or greater, 0.01 or greater, 0.02 or greater, 0.04 or less, 0.05 or less, or 0.1 or less.

When a1, b1, c1, and d1 above satisfy the above ranges, a positive electrode active material exhibiting excellent energy density and high capacity characteristics may be obtained.

The transition metal hydroxide having the composition represented by Formula 1 above may be a commercially available product or may be prepared according to a method for preparing a transition metal hydroxide, such as a coprecipitation method well known in the art.

According to the present invention, the lithium raw material may be lithium-containing sulfate, nitrate, acetate, carbonate, oxalate, citrate, halide, hydroxide, or oxyhydroxide. Specifically, the lithium raw material may be Li₂CO₃, LiNO₃, LiNO₂, LiOH, LiOH · H₂O, LiH, LiF, LiCl, LiBr, LiI, CH₃COOLi, Li₂O, Li₂SO₄, CH₃COOLi, Li₃C₆H₅O₇, or the like.

According to the present invention, the transition metal hydroxide and the lithium raw material may be mixed such that a molar ratio (M:Li) of transition metal (M) contained in the transition metal hydroxide and lithium (Li) contained in the lithium raw material is 1:0.95 to 1.10, specifically 1:1.01 to 1.06, 1:1.02 to 1.06, 1:1.02 to 1.05, or 1:1.02 to 1.04. In this case, excess lithium may be prevented from entering into a structure of the positive electrode active material, and also the content of unreacted residual lithium may be low.

Meanwhile, the mixing of the transition metal hydroxide and the lithium raw material may be performed through dry mixing, using a commonly used dry mixing method, such as a grinder mixing method, a mechano-fusion method, or a general dry mixer (such as a Henschel mixer, an intensive mixer, or a Loedige mixer), but the embodiment of the present invention is not limited thereto.

Meanwhile, in the mixing of the transition metal hydroxide and the lithium raw material, an additional metal element-containing material may be further mixed as needed. In this case, the additional metal element may be at least one selected from Al, Zr, B, W, Mg, Hf, Ta, Ti, Sr, Ba, Ce, F, P, S, and La.

The additional metal element-containing material may be acetate, nitrate, sulfate, halide, sulfide, hydroxide, oxide, or oxyhydroxide, which contains the additional metal element.

### Step (B)

The present invention includes (B) firing the mixture to prepare a lithium transition metal oxide in the form of a single particle, wherein the firing includes a temperature-raising phase in which firing is performed at a temperature raised to 700 °C to 1,000 °C from room temperature and a temperature-maintaining phase in which firing is performed at a constant temperature of 700 °C to 1,000 °C. The present invention involves, in the temperature-raising phase, the temperature-raising from room temperature to a temperature of 400 °C to 500 °C is performed in an atmosphere containing water vapor. Specifically, in the present invention, out of the temperature-raising phase, only the temperature-raising from room temperature to a temperature of 400 °C to 500 °C is performed in an atmosphere containing water vapor, and in the remaining phase, temperature-raising is performed in an atmosphere without water vapor. That is, the temperature-raising phase includes a first temperature-raising phase in which firing is performed in an atmosphere containing water vapor in the temperature-raising from room temperature to a temperature of 400 °C to 500 °C, and a second temperature-raising phase in which firing is performed in an atmosphere without water vapor in the temperature-raising from a temperature of 400 °C to 500 °C to a temperature of 700 °C to 1,000 °C.

Meanwhile, the firing may further include a cooling phase in which the temperature is decreased from a temperature of 700 °C to 1,000 °C down to room temperature after the temperature-maintaining phase.

In typical methods for preparing single-particle lithium transition metal oxide, additives to promote crystallization were added, excess lithium raw materials were used, or firing was performed at high temperatures for a long duration. However, the addition of additives left behind impurities, the use of excess lithium raw materials reduced capacity or left unreacted residual lithium due to the introduction of excess lithium incorporation into a positive electrode material, and the high-temperature firing for a long duration resulted in low productivity.

Meanwhile, as in the present invention, when the temperature-raising from room temperature to a temperature of 400 °C to 500 °C is performed in an atmosphere containing water vapor in the temperature-raising phase, uniform dispersion of lithium raw materials through partial melting of lithium, promotion of heat transfer through the formation of a liquid-solid interface at a solid-solid interface, and promotion of surface particle growth through material transfer diffusion resulting from enhanced oxygen binding strength due to artificial oxygen defects through the formation of a hydroxyl group (-OH) on the particle surface may be achieved, and a positive electrode active material exhibiting excellent quality with high monodispersity may be prepared even when firing at lower temperatures and for shorter times compared to typical methods, leading to improved production yields of the positive electrode active material.

According to the present invention, the firing includes a temperature-raising phase in which firing is performed at a temperature raised to 700 °C to 1,000 °C from room temperature and a temperature-maintaining phase in which firing is performed at a constant temperature of 700 °C to 1,000 °C. That is, the firing is performed by raising the temperature from room temperature to a temperature of 700 °C to 1,000 °C and then maintaining the raised temperature at a temperature of 700 °C to 1,000 °C. Meanwhile, when the firing temperature is less than 700 °C, conversion reactions of LiOH to Li₂O do not take place properly, and thus a layered structure of a positive electrode material is not formed well, and when the firing temperature is greater than 1,000 °C, lithium (Li) in the structure is insufficient due to volatilization of Li₂O in the formed positive electrode material layered structure, and thus the structural shape may change. Specifically, the firing may include a temperature-raising phase in which firing is performed at a temperature raised to 800 °C to 900 °C from room temperature and a temperature-maintaining phase in which firing is performed at a constant temperature of 800 °C to 900 °C. More specifically, the firing may include a temperature-raising phase in which firing is performed at a temperature raised to 850 °C to 900 °C from room temperature and a temperature-maintaining phase in which firing is performed at a constant temperature of 850 °C to 900 °C.

In the present invention, in the temperature-raising phase, the temperature-raising from room temperature to a temperature of 400 °C to 500 °C, specifically, the temperature-raising to a temperature of 400 °C to 450 °C, may be performed in an atmosphere containing water vapor.

Meanwhile, in the temperature-raising phase, when the temperature-raising is performed at a temperature outside the above temperature range (temperature after LiOH melting phase) in an atmosphere containing water vapor, a reaction rate of LiOH being generated into Li₂O is reduced as H₂O increases in Reaction Formula 1 below, thereby hindering particle growth. In addition, as lithium participating in the reaction becomes insufficient, a rock-salt structure or a spinel structure may be formed instead of a desired layered structure.

(Reaction Formula 1) 2LiOH -> Li₂O + H₂O (g)

In addition, when firing is performed in an atmosphere containing water vapor in the temperature-maintaining phase instead of the temperature-raising phase, the formation of an oxidizing atmosphere is prevented, thereby inhibiting the formation of oxides, and Li₂O and H₂O may form LiOH according to Reaction Formula 2, which may cause an increase in residual LiOH present on a surface.

(Reaction Formula 2) Li₂O + H₂O ->2LiOH, △G°rxn =-575.2 kJ/mol

Specifically, in the present invention, in the temperature-raising phase, the temperature-raising from room temperature to a temperature of 400 °C to 500 °C may be performed by injecting water vapor in an amount of 100 wt% to 1,000 wt% with respect to a total weight of the mixture at a rate of 0.5 kg/hour to 5 kg/hour. When the content of water vapor with respect to a total weight of the mixture is within the above range, promoting particle growth reactions through an appropriate Li melting reaction may be achieved, and when the water vapor injection rate is within the above range, adjusting moisture content in powder may be achieved by an appropriate injection rate.

According to the present invention, a temperature-raising rate during the temperature-raising from room temperature to a temperature of 700 °C to 1000 °C may be 1.0 °C/min to 5.0 °C/min. In this case, production yields are excellent, and the temperature of a reactor and the temperature of a fired material are closely matched, and thus the fired material may absorb all the heat provided at the set holding temperature.

According to the present invention, the atmosphere containing water vapor may be an oxidizing atmosphere containing water vapor. In this case, while smoothly discharging LiOH and H₂O generated from the precursor, an oxidizing atmosphere required for reactions may be formed.

According to the present invention, the temperature-maintaining phase may be performed for 1 hour to 7 hours. Specifically, the temperature-maintaining phase may be performed for 1 hour or more, 2 hours or more, 6 hours or less, or 7 hours or less. The preparation method according to the present invention involves, in the temperature-raising phase, performing the temperature-raising from room temperature to a temperature of 400 °C to 500 °C in an atmosphere containing water vapor, and thus particle growth of a lithium transition metal oxide may be promoted and a positive electrode active material exhibiting excellent quality with high monodispersity may be prepared even at a shorter time of firing, leading to improved production yields of the positive electrode active material.

### Positive electrode active material powder

A positive electrode active material powder according to the present invention may be prepared through the preparation method described above, and may include a lithium composite transition metal oxide in the form of a single particle consisting of 1 to 10 primary particles, wherein the primary particles have an average particle size of 2.0 µm to 5.0 µm, and a ratio of the number of particles having a particle size of less than 1 µm among the total primary particles may be 8.0% or less.

The positive electrode active material powder according to the present invention may have an average particle size of the primary particles of 2.0 µm to 5.0 µm, specifically, 2.0 µm or greater, 2.5 µm or greater, 3.0 µm or greater, 3.5 µm or greater, 4.5 µm or less, or 5.0 µm or less. In addition, a ratio of the number of particles having a particle size of less than 1 µm among the total primary particles of the positive electrode active material powder may be 8.0% or less. In this case, the positive electrode active material exhibits high monodispersity, and thus a lithium secondary battery including the positive electrode active material may exhibit excellent performance.

Meanwhile, when the average particle size of the primary particles is less than 2.0 µm, particle growth does not take place properly, reducing particle strength, and thus when preparing an electrode, particles may break, causing reduced capacity or gas generation. When the average particle size of the primary particles is greater than 5.0 µm, excessive particle growth increases an Li migration path, causing reduced capacity and increased resistance. When the ratio of the number of particles having a particle size of less than 1 µm among the total primary particles of the positive electrode active material powder is greater than 8.0%, a ratio of desired single particles decreases, causing gas generation resulting from side reactions during electrode reactions of relatively small particles.

According to the present invention, the lithium composite transition metal oxide may contain at least 80 mol% of nickel among total transition metals excluding lithium. The lithium composite transition metal oxide may include nickel, and cobalt, manganese, or a combination thereof.

Specifically, the lithium composite transition metal oxide may have a composition represented by Formula 2 below.

[Formula 2] Li₁₊ₓNiₐ₂Co_{b2}Mn_{c2}M²_{d2}O₂

In Formula 2 above,
M² is at least one selected from the group consisting of Al, Zr, B, W, Mg, Hf, Ta, Ti, Sr, Ba, Ce, F, P, S, and La, and
-0.1≤x≤0.1, 0.8≤a2<1.0, 0<b2<0.2, 0<c2<0.2, and 0≤d2≤0.1.

Meanwhile, a2+b2+c2+d2=1.

M² above may be at least one selected from Al, Zr, B, W, Mg, Hf, Ta, Ti, Sr, Ba, Ce, F, P, S, and La as a doping element, and may specifically be Al, Zr, Ti, or a combination thereof.

1+x above indicates a molar ratio of lithium in the lithium transition metal oxide, and x above be -0.1 or greater, -0.05 or greater, 0 or greater, 0.05 or less, or 0.1 or less.

a2 above indicates a molar ratio of nickel to all metals excluding lithium in the lithium transition metal oxide, and may be 0.8 or greater, 0.83 or greater, 0.85 or greater, 0.93 or less, or less than 1.0.

b2 above indicates a molar ratio of cobalt to total metals excluding lithium in the lithium transition metal oxide, and may be greater than 0, 0.04 or greater, 0.05 or greater, 0.1 or less, 0.15 or less, or less than 0.2.

c2 above indicates a molar ratio of manganese to total metals excluding lithium in the lithium transition metal oxide, and may be greater than 0, 0.05 or greater, 0.08 or greater, 0.12 or less, 0.16 or less, or less than 0.2.

d2 above indicates a molar ratio of M¹ element to total metals excluding lithium in the lithium transition metal oxide, and may be 0 or greater, 0.01 or greater, 0.02 or greater, 0.04 or less, 0.05 or less, or 0.1 or less.

When a2, b2, c2, and d2 above satisfy the above ranges, a battery including the positive electrode active material according to the present invention may exhibit excellent energy density and high capacity.

### Positive electrode

In addition, the present invention provides a positive electrode for a lithium secondary battery including the positive electrode active material described above.

Specifically, the positive electrode includes a positive electrode collector and a positive electrode active material layer placed on at least one surface of the positive electrode collector and including the positive electrode active material.

The positive electrode current collector is not particularly limited as long as it has conductivity without causing a chemical change in a battery. For example, stainless steel, aluminum, nickel, titanium, baked carbon, or aluminum or stainless steel that is surface-treated with one of carbon, nickel, titanium, silver, and the like may be used. In addition, the positive electrode current collector may typically have a thickness of 3 to 500 µm, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode active material layer may include a conductive material and a binder, together with a positive electrode active material.

Here, the positive electrode active material may be included in an amount of 80 to 99 wt%, more specifically 85 to 98 wt% with respect to the total weight of the positive electrode active material layer. When included in the above amount range, the positive electrode active material may exhibit excellent capacity properties.

In this case, the conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 1 to 30 wt% with respect to the total weight of the positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used. The binder may be included in an amount of 1 to 30 wt% with respect to the total weight of the positive electrode active material layer.

The positive electrode may be prepared according to a typical method of preparing a positive electrode except that the positive electrode active material described above is used. Specifically, a positive electrode material mixture, which is prepared by dissolving or dispersing the positive electrode active material and selectively, a binder and a conductive material in a solvent, is coated on the positive electrode collector, and the positive electrode may then be prepared by drying and roll-pressing the coated positive electrode collector. In this case, types and amounts of the positive electrode active material, the binder, and the conductive material are as described above.

The solvent may be a solvent commonly used in the art, and may be dimethyl sulfoxide (DMSO), isopropyl alcohol, N-methylpyrrolidone (NMP), acetone, water, or the like, and any one thereof or a mixture of two or more thereof may be used. The amount of the solvent to be used is sufficient if the solvent may dissolve or disperse the positive electrode active material, the conductive material, and the binder in consideration of the applying thickness of a slurry and preparation yield, and thereafter, have a viscosity which may exhibit excellent thickness uniformity during application for the preparation of a positive electrode.

In addition, in another method, the positive electrode may be prepared by casting the positive electrode material mixture on a separate support and then laminating a film separated from the support on the positive electrode collector.

### Lithium secondary battery

In addition, the present invention may manufacture an electrochemical device including the positive electrode. The electrochemical device may be specifically a battery, a capacitor, or the like, and more specifically, may be a lithium secondary battery.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

In addition, the lithium secondary battery may selectively further include a battery case for accommodating an electrode assembly composed of the positive electrode, the negative electrode, and the separator, and a sealing member for sealing the battery case.

In the lithium secondary battery, the negative electrode includes a negative electrode current collector and a negative electrode active material layer positioned on the negative electrode current collector.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. In addition, the negative electrode current collector may typically have a thickness of 3 µm to 500 µm, and as in the case of the positive electrode current collector, fine irregularities may be formed on the surface of the negative electrode current collector to improve the adhesion of a negative electrode active material. For example, the negative electrode current collector may be used in various forms such as a film, a sheet, a foil, a net, a porous body, a foam body, and a non-woven fabric body.

The negative electrode active material layer optionally includes a binder and a conductive material in addition to the negative electrode active material.

A compound capable of reversibly intercalating and deintercalating lithium may be used as the negative electrode active material. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as SiO_{β}(0<β<2), SnO₂, a vanadium oxide, and a lithium vanadium oxide; or a composite including the metallic compound and the carbonaceous material such as an Si-C composite or an Sn-C composite, and any one thereof or a mixture of two or more thereof may be used. In addition, as the negative electrode active material, a lithium metal thin film may be used. In addition, as a carbon material, low-crystalline carbon, high-crystalline carbon, and the like may all be used. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% with respect to the total weight of a negative electrode active material layer.

The binder is a component for assisting in bonding between a conductive material, an active material, and a current collector, and is typically added in an amount of 0.1 wt% to 10 wt% with respect to the total weight of a negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive material is a component for further improving the conductivity of a negative electrode active material, and may be added in an amount of 10 wt% or less, preferably 5 wt% or less, with respect to the total weight of a negative electrode active material layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon fibers and metal fibers; carbon fluoride powder; metal powder such as aluminum powder, and nickel powder; conductive whiskers such as zinc oxide whiskers and potassium titanate whiskers; conductive metal oxide such as titanium oxide; or polyphenylene derivatives, or the like may be used.

The negative electrode active material layer may be prepared by applying a negative electrode mixture material, which is prepared by dissolving or dispersing a negative electrode active material and selectively a binder and a conductive material in a solvent, on a negative electrode current collector and drying the coated negative electrode collector, or may be prepared by casting the negative electrode material mixture on a separate support and then laminating a film separated from the support on the negative electrode current collector.

Meanwhile, in the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

In addition, the electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

Specifically, the electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it may provide lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN (C₂F₅SO₂)₂, LiN(CF₃SO₂)₂. LiCl, LiI, LiB(C₂O₄)₂, or the like may be used. The lithium salt may be used in a concentration range of 0.1 M to 4.0 M, preferably 0.1 M to 2.0 M. When the concentration of the lithium salt is included within the above range, the electrolyte has suitable conductivity and viscosity and may thus exhibit excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. At this time, the additive may be included in an amount of 0.1 to 5 parts by weight based on a total weight of 100 parts by weight of the electrolyte.

The lithium secondary battery including the positive electrode active material according to the present invention as describe above stably exhibits excellent discharging capacity, output properties, and lifespan properties, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the same are provided.

The battery module or the battery pack may be used as a power source of at least any one medium and large sized device of a power tool; electric cars including an electric vehicle (EV), a hybrid electric vehicle, and a plug-in hybrid electric vehicle (PHEV); or a power storage system.

The outer shape of the lithium secondary battery of the present invention is not particularly limited, and thus a cylindrical shape using a can, a prismatic shape, a pouch shape, or a coin shape, may be used.

The lithium secondary battery according to the present invention may be used in a battery cell which is used as a power source for a small-sized device, and may also be preferably used as a unit cell for a medium- and large-sized battery module including a plurality of battery cells.

### MODE FOR CARRYING OUT THE INVENTION

Hereinafter, the present invention will be described in detail with reference to embodiments. However, Examples according to the present invention may be modified into other various forms, and the scope of the present invention should not be construed as being limited to Examples described below. Examples of the present invention are provided to more fully describe the present invention to those skilled in the art.

### Examples and Comparative Examples

### Example 1

Ni_{0.88}Co_{0.05}Mn_{0.07}(OH)₂ and LiOH were dry mixed such that a molar ratio of (Ni+Co+Mn):Li was 1:1.03 to prepare 500 g of mixture.

500 g of the mixture was introduced into a firing furnace, and steam of 500 wt% with respect to a total weight of the mixture was introduced into the firing furnace at a rate of 1.5 kg/hour, and the mixture was fired at a temperature-raising rate of 4 °C/min up to 450 °C from room temperature in an oxidizing atmosphere, and then fired at a temperature-raising rate of 4 °C/min up to 850 °C from 450 °C in an oxidizing atmosphere after the introduction of steam stopped. Then, the firing was performed at a constant temperature of 880 °C for 6 hours in an oxidizing atmosphere to prepare a lithium transition metal oxide in the form of a single particle.

### Example 2

Ni_{0.88}Co_{0.05}Mn_{0.07} (OH)₂ and LiOH were dry mixed such that a molar ratio of (Ni+Co+Mn):Li was 1:1.03 to prepare 500 g of mixture.

500 g of the mixture was introduced into a firing furnace, and steam of 500 wt% with respect to a total weight of the mixture was introduced into the firing at a rate of 1.5 kg/hour, and fired at a temperature-raising rate of 4 °C/min up to 450 °C from room temperature in an oxidizing atmosphere, and then fired at a temperature-raising rate of 4 °C/min up to 850 °C from 450 °C in an oxidizing atmosphere after the introduction of steam stopped. Then, the firing was performed at a constant temperature of 880 °C for 2 hours in an oxidizing atmosphere to prepare a lithium transition metal oxide in the form of a single particle.

### Example 3

Ni_{0.88}Co_{0.05}Mn_{0.07} (OH)₂ and LiOH were dry mixed such that a molar ratio of (Ni+Co+Mn):Li was 1:1.03 to prepare 500 g of mixture.

500 g of the mixture was introduced into a firing furnace, and steam of 333 wt% with respect to a total weight of the mixture was introduced into the firing furnace at a rate of 1.0 kg/hour, and the mixture was fired at a temperature-raising rate of 4 °C/min up to 450 °C from room temperature in an oxidizing atmosphere, and then fired at a temperature-raising rate of 4 °C/min up to 850 °C from 450 °C in an oxidizing atmosphere after the introduction of steam stopped. Then, the firing was performed at a constant temperature of 880 °C for 4 hours in an oxidizing atmosphere to prepare a lithium transition metal oxide in the form of a single particle.

### Example 4

Ni_{0.88}Co_{0.05}Mn_{0.07} (OH)₂ and LiOH were dry mixed such that a molar ratio of (Ni+Co+Mn):Li was 1:1.03 to prepare 500 g of mixture.

500 g of the mixture was introduced into a firing furnace, and steam of 333 wt% with respect to a total weight of the mixture was introduced into the firing furnace at a rate of 1.0 kg/hour, and the mixture was fired at a temperature-raising rate of 4 °C/min up to 450 °C from room temperature in an oxidizing atmosphere, and then fired at a temperature-raising rate of 4 °C/min up to 850 °C from 450 °C in an oxidizing atmosphere after the introduction of steam stopped. Then, the firing was performed at a constant temperature of 880 °C for 6 hours in an oxidizing atmosphere to prepare a lithium transition metal oxide in the form of a single particle.

### Comparative Example 1

Ni_{0.88}Co_{0.05}Mn_{0.07} (OH)₂ and LiOH were dry mixed such that a molar ratio of (Ni+Co+Mn):Li was 1:1.03 to prepare 500 g of mixture.

500 g of the mixture was introduced into a firing furnace, fired at a temperature-raising rate of 4 °C/min up to 880 °C from room temperature in an oxidizing atmosphere, and then fired at a constant temperature of 880 °C for 6 hours in an oxidizing atmosphere to prepare a lithium transition metal oxide in the form of a single particle.

### Comparative Example 2

Ni_{0.88}Co_{0.05}Mn_{0.07} (OH)₂ and LiOH were dry mixed such that a molar ratio of (Ni+Co+Mn):Li was 1:1.03 to prepare 500 g of mixture.

500 g of the mixture was introduced into a firing furnace and fired at a temperature-raising rate of 4 °C/min up to 450 °C from room temperature in an oxidizing atmosphere, and then steam of 500 wt% with respect to a total weight of the mixture was introduced into the firing furnace at a rate of 1.0 kg/hour, and the mixture was fired at a temperature-raising rate of 4 °C/min up to 850 °C from 450 °C in an oxidizing atmosphere. Then, the firing was performed at a constant temperature of 880 °C for 6 hours in an oxidizing atmosphere to prepare a lithium transition metal oxide in the form of a single particle.

### Comparative Example 3

Ni_{0.88}Co_{0.05}Mn_{0.07} (OH)₂ and LiOH were dry mixed such that a molar ratio of (Ni+Co+Mn):Li was 1:1.03 to prepare 500 g of mixture.

500 g of the mixture was introduced into a firing furnace and fired at a temperature-raising rate of 4 °C/min up to 850 °C from room temperature in an oxidizing atmosphere, and then steam of 1,000 wt% with respect to a total weight of the mixture was introduced into the firing furnace at a rate of 1.5 kg/hour, and the mixture was fired at a constant temperature of 880 °C for 6 hours in an oxidizing atmosphere to prepare a lithium transition metal oxide in the form of a single particle.

### Experimental Example

### Experimental Example 1

Using a scanning electron microscope (SEM), SEM images (magnification: ×2,000) of each of positive electrode active materials prepared in Examples 1 to 4 and Comparative Examples 1 to 3 were obtained, and the images were image-processed through the above-described method to obtain primary particle-level segmented images, from which an average particle size of primary particles and a ratio of the number of particles having a particle size of less than 1 µm among total primary particles were obtained, and the results are shown in Table 1 below.

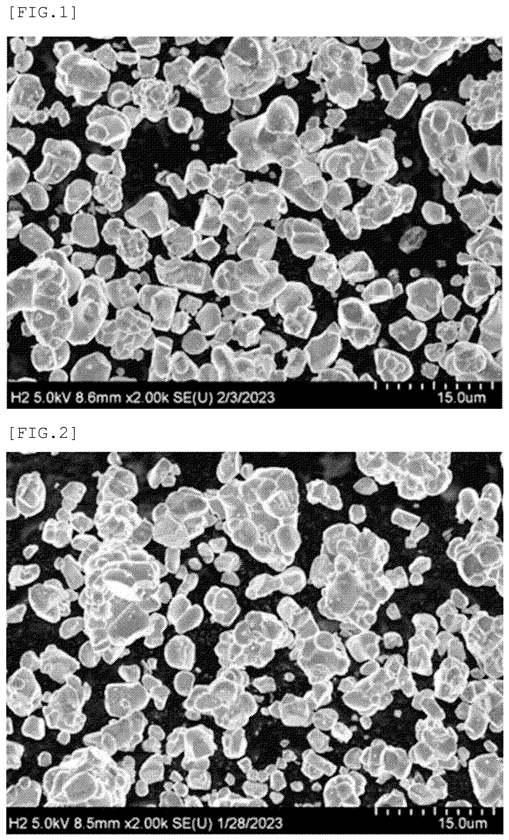

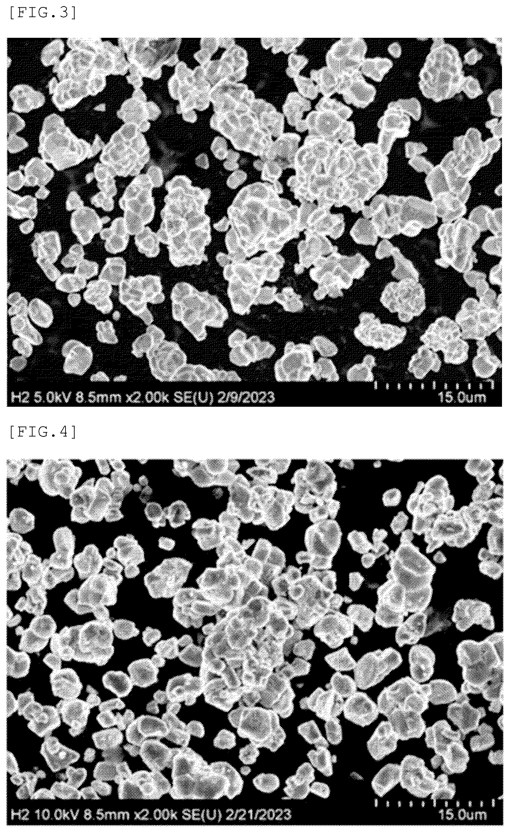

FIGS. 1 to 4 sequentially show SEM images of positive electrode active material powders of Example 1 and Comparative Examples 1 to 3. Specifically, FIG. 1 is an SEM image of the positive electrode active material powder of Example 1, FIG. 2 is an SEM image of the positive electrode active material powder of Comparative Example 1, FIG. 3 is an SEM image of the positive electrode active material powder of Comparative Example 2, and FIG. 4 is an SEM image of the positive electrode active material powder of Comparative Example 3.

**[Table 1]**

| | Particle size of primary particle (µm) | Ratio of the number of particles having a size of less than 1 µm among total primary particles (%) |
|---|---|---|
| Example 1 | 3.6 | 6.9 |
| Example 2 | 3.6 | 8.0 |
| Example 3 | 4.0 | 7.0 |
| Example 4 | 4.1 | 5.0 |
| Comparative Example 1 | 3.1 | 8.8 |
| Comparative Example 2 | 2.2 | 16.2 |
| Comparative Example 3 | 2.7 | 11.7 |

Referring to Table 1 above, it is determined that the positive electrode active materials of Examples 1 to 4 have a greater average particle size of the primary particles than the positive electrode active materials of Comparative Examples 1 to 3, and that the ratio of particles having a particle size of less than 1 µm among the total primary particles is low. Accordingly, it is seen that when the positive electrode active material is prepared according to the preparation method of the present invention, particle growth is promoted, and thus a positive electrode active material exhibiting high monodispersity is prepared.

### Experimental Example 2

To determine the quality of the positive electrode active materials prepared in Examples 1 to 4 and Comparative Examples 1 to 3, the content of residual lithium present on surfaces of the positive electrode active materials was measured.

Specifically, pH titration was performed to measure the content of residual lithium present on the surfaces of the positive electrode active materials prepared in Examples 1 to 4 and Comparative Examples 1 to 3. Metrohm was used as a pH meter, and pH was recorded by titrating 1 mL at a time. Specifically, 5 g of the positive electrode active material powder prepared in Examples 1 to 4 and Comparative Examples 1 to 3 and 100 mL of distilled water were stirred. The pH was titrated by adding 1 N HCl solution to the solution, and the content of Li₂CO₃ and LiOH was derived, and the results are shown in Table 2 below.

**[Table 2]**

| | Li₂CO₃ (wt%) | LiOH (wt%) |
|---|---|---|
| Example 1 | 0.39 | 0.55 |
| Example 2 | 0.19 | 0.14 |
| Example 3 | 0.15 | 0.11 |
| Example 4 | 0.13 | 0.14 |
| Comparative Example 1 | 0.66 | 0.92 |
| Comparative Example 2 | 0.30 | 0.17 |
| Comparative Example 3 | 0.35 | 1.12 |

Referring to Table 2 above, it is determined that the positive electrode active materials of Examples 1 to 4 have significantly lower content of residual lithium on the surface than the positive electrode active materials of Comparative Examples 1 and 3.

Meanwhile, Comparative Example 2 was found to have a small amount of residual lithium. This is because when steam was introduced at high temperatures, the volatilization of Li₂O present on the particle surface was promoted, and consequently, lithium (Li) in the positive electrode active material structure decreased, and thus the amount of residual lithium was measured to be small. That is, in Comparative Example 2, although the amount of residual lithium was measured to be small, particle growth is hindered due to a shortage of lithium (Li) required for the particle growth.

Accordingly, it is seen that when a positive electrode active material is prepared according to the preparation method of the present invention, the positive electrode active material may exhibit enhanced quality.

## Claims

1. A method for preparing a positive electrode active material, the method comprising:
(A) mixing a transition metal hydroxide and a lithium raw material to prepare a mixture; and
(B) firing the mixture to prepare a lithium transition metal oxide in the form of a single particle,
wherein the firing comprises a temperature-raising phase in which firing is performed at a temperature raised to 700 °C to 1,000 °C from room temperature and a temperature-maintaining phase in which firing is performed at a constant temperature of 700 °C to 1,000 °C, and
in the temperature-raising phase, the temperature-raising from room temperature to a temperature of 400 °C to 500 °C is performed in an atmosphere containing water vapor.

2. The method of claim 1, wherein the transition metal hydroxide contains at least 80 mol% of nickel among total transition metals.

3. The method of claim 1, wherein the transition metal hydroxide has a composition represented by Formula 1 below:
[Formula 1] Niₐ₁Co_{b1}Mn_{c1}M¹_{d1}(OH)₂
wherein, in Formula 1 above,
M¹ is at least one selected from the group consisting of Al, Zr, B, W, Mg, Hf, Ta, Ti, Sr, Ba, Ce, F, P, S, and La, and
0.8≤a1<1.0, 0<b1<0.2, 0<c1<0.2, and 0≤d1≤0.1.

4. The method of claim 1, wherein the transition metal hydroxide and the lithium raw material are mixed such that a molar ratio (M:Li) of transition metal (M) contained in the transition metal hydroxide and lithium (Li) contained in the lithium raw material is 1:0.95 to 1:1.10.

5. The method of claim 1, wherein the firing comprises a temperature-raising phase in which firing is performed at a temperature raised to 800 °C to 900 °C from room temperature and a temperature-maintaining phase in which firing is performed at a constant temperature of 800 °C to 900 °C.

6. The method of claim 1, wherein in the temperature-raising phase, the temperature-raising from room temperature to a temperature of 400 °C to 450 °C is performed in an atmosphere containing water vapor.

7. The method of claim 1, wherein a temperature-raising rate during the temperature-raising from room temperature to a temperature of 700 °C to 1000 °C is 1.0 °C/min to 5.0 °C/min.

8. The method of claim 1, wherein the atmosphere containing water vapor is an oxidizing atmosphere containing water vapor.

9. The method of claim 1, wherein the temperature-maintaining phase is performed for 1 hour to 7 hours.
